# EUROPEAN PATENT SPECIFICATION

(11) **EP 0 352 234 B1**
(45) Date of publication and mention of the grant of the patent: **21.04.1993**
(21) Application number: 89830272.4
(22) Date of filing: 20.06.1989
(51) Int. Cl.: B60N 2/48

(54) **A headrest element for seats, particularly motor-vehicle seats**
Kopfstützenelement für Sitze, insbesondere Kraftfahrzeugsitze
Elément d'appui-tête pour sièges, en particulier sièges de véhicules à moteur

(30) Priority: 05.07.1988 IT 6763588
(43) Date of publication of application: 24.01.1990
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- DE-A- 3 029 150
- FR-A- 1 588 910
- US-A- 3 403 938

## Description

The present invention relates to headrest elements in general or, in short, to seat headrests and has been developed with particular attention to its possible application to motor-vehicle seats.

In accordance with a conventional concept, considered in the greater proportion of current motor-vehicle production, headrests are provided at the top of the seat backrests principally to avoid the phenomenon known as "whiplash" which arises, for example as a result of a sharp deceleration due to a collision or to a vehicle being hit by a following vehicle, when the head of the occupant of the motor vehicle seat is projected violently backwards, with an obvious risk of injury.

The Italian industrial utility model application no. 53501-B/85 (grant number 203806), in the name of the same Applicant, describes a headrest whose front face has a generally-concave shape, complementary to the shape of the occipital region of the head of a seat occupant. Support means are provided for keeping the headrest in a position in which it supports the head of the seat occupant whith its front face in contact with the occipital region of the person's head.

Thus, according to this latter solution, the headrest is intended to be used continuously, offering greater comfort to the person occupying the seat.

More specifically, the present invention relates to a seat headrest having the features called for in the preamble of Claim 1, such features being Known e.g. from FR-A- 1 588 910.

The object of the present invention is to provide a headrest element which is improved as regards enabling the headrest to be adapted as precisely as possible to the anthropometric characteristics and driving or travelling preferences of the seat occupant.

In this respect, it should be noted that, as well as the requirement for the position of the headrest to be adaptable precisely for people of different statures who may occupy the seat, there is also a need to offer different people, having approximately the same anthropometric characteristics, different attitudes of support according to their personal habits or tastes.

This is particularly true of seats for passengers who are not involved directly in the driving of the vehicle and who therefore have a wider choice of possible travelling positions than the driver.

According to the present invention, this object is achieved by virtue of a headrest element, or in short, a seat headrest, having the further features as set forth in Claim 1.

The invention will now be described, purely by way of non-limiting example, with reference to the appended drawings, in which:
Figure 1 is a partially-transparent perspective view of a headrest produced according to the invention, and
Figure 2 is a partially-cut-away side elevation taken on the arrow II of Figure 1.

A headrest element or, in short, a headrest for mounting on the top of the backrest of a motor-vehicle seat (not illustrated as a whole) is generally indicated 1.

According to a widely known solution, the headrest 1 includes a rigid support structure 2 (usually made of metal or with a metal frame) including two vertical rods 3. The latter are intended to be inserted slidingly - with selective adjustability of the position of insertion - into tubular seats (not illustrated) which extend approximately vertically within the structure of the backrest.

A shaped body 30 is fitted into the structure 2 and is constituted by a frame (better described below) covered by a mass of padding (upholstery). This mass is intended to improve the comfort of the seat occupant whose head, as stated in the introduction to the present description, is intended to rest substantially continuously on the shaped body 30 of the headrest 1 during normal travel of the motor vehicle.

A shaft 4 is mounted at the top of the support structure 2 and is rotatable about a horizontal axis X₄. The shaft 4, which extends so as to connect the upper ends of the shafts 3 has keyed to it two eccentrics 5 in correspondence with the two outer opposite sides of the headrest 1. Only one of the eccentrics 5, specifically the one situated on the left hand side of the headrest, is visible in the drawings.

The shaft 4 can be rotated about its axis X₄ by means of a hand-grip 6 provided on one side of the headrest.

Two plates, indicated 7, are fitted on to the eccentrics 5 and act as the sides of the shaped body 30.

In the embodiment illustrated, the two plates or sides 7 have a shape which could be defined as a kidney-shaped, that is, slightly arcuate with their concavities facing towards the front face of the headrest 1, that is the face which supports the head of the seat occupant.

The plates 7 are mounted generally obliquely relative to the extent (approximately vertical) of the structure 2 with their upper ends 8, which are provided with apertures 90, fitted around respective eccentrics 5 and situated in positions generally further back than the lower ends 100.

Each of the plates 7 (mounted on the structure 2 in substantially homologous positions) has a central slot 9 slidably engaged by a respective pin 10 which projects generally horizontally from the structure 2 of the headrest.

Thus, like the body 30 as a whole, the slots 9, shown here as being approximately straight, also have a first end 9a which is situated generally forward of and lower than the other end 9b. This means that the slots 9, which act as guide surfaces for the movement of the cam mechanism 9, 10 can be seen to have an upper end (9b) situated in a portion generally further back than the lower end (9a).

The lower ends 100 of the two plates or sides 7 are interconnected in a generally bridge-like arrangement by a generally arcuate horizontal restraining strap 11 with its concavity facing the front face of the headrest. Connected in a generally reticular structure to the strap 11, which is of flexible material, are a plurality of additional vertical reinforcing elements 12 (three in the embodiment illustrated) which are also made in the form of flexible bands and complete the framework in the front part of the shaped body 30. This framework has a generally curved bowl-like shape which improves the restraint of the head of whoever is occupying the seat.

More particularly, each of the reinforcing elements 12 extends between the strap 11 and the upper part of the structure 2 which extends in a generally portal-like configuration to connect the upper ends of the shafts 3.

The rotation of the shaft 4, driven by means of the hand-grip 6, causes the eccentrics 5 to rotate about the axis X₄. The eccentrics 5, being engaged in the apertures 90 then impart a circular movement, comparable essentially to an orbital movement about the axis X₄ of the shaft 4, to the upper ends 8 of the sides or plates 7.

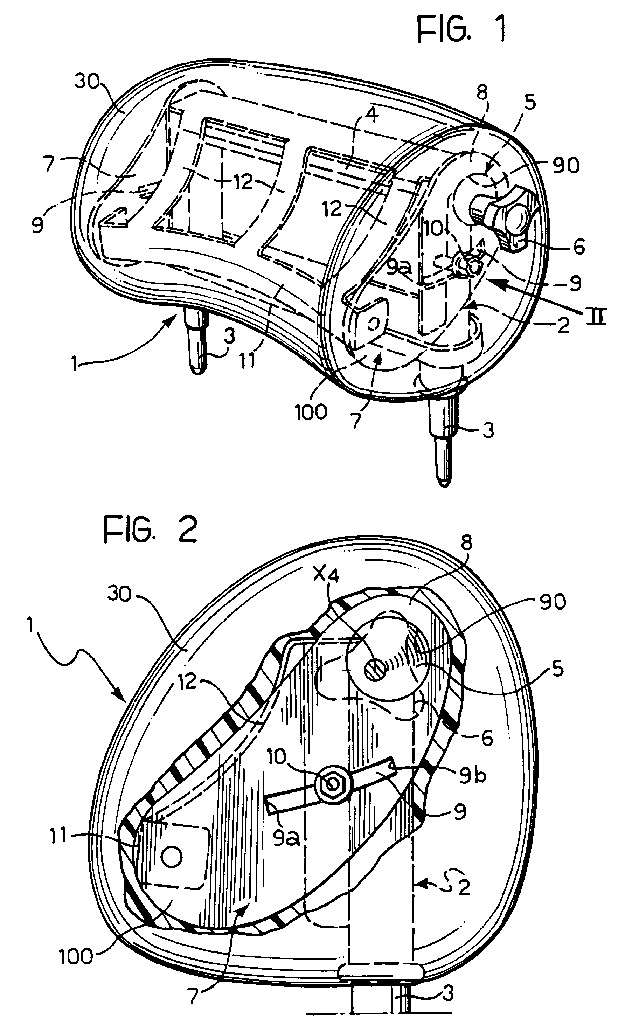

In general, if the eccentrics 5 start in their highest positions relative to the axis X₄ and the hand-grip 6 is rotated clockwise (with reference to the orientation in Figure 2), this movement will bring the plates 7 from their initial positions, in which their upper ends 8 (which are vertically aligned with the shafts 3) are highest, to positions which are progressively further back and lower until (when the eccentrics 5 are in their lowermost positions relative to the axis X₄) they reach their lowest positions in which the ends 8 are again aligned with the shafts 3, and then return through successively higher positions in which the ends 8 are progressively further forward and higher, to their initial highest positions.

As a result of the engagement of the pins 10 (fixed relative to the structure 2) within the slots 9 provided in the plates 7, the above orbital movement of the upper ends 8 of the plates 7 is accompanied by a pivoting movement of the plates 7 (and of the shaped body 30 as a whole) about the horizontal axis defined by the pins 10 which are fixed to the structure 2.

Starting from the position in which the upper ends 8 are highest they will then move gradually (as a result of the clockwise rotation of the hand-grip 6) to their lowest positions while the sides 7 and the body 30 as a whole assume an orientation which is gradually more inclined to the horizontal. As the upper ends 8 then return to their highest positions (still by clockwise rotation of the hand-grip 6), the plates 7 and the body 30 gradually pivot towards their orientation which is nearest to the vertical.

By rotating the hand-grip 6, the person occupying the seat can thus vary not only the height of the headrest 1 relative to the backrest but also its inclination until the position considered most pleasing is reached.

Moreover, since the reinforcing elements 12 are connected at one end to the structure 2, which remains fixed, and at their opposite ends to the strap 11 which interconnects the plates 7 and therefore moves with them, the combined rotary-pivoting movement (orientation) of the body 30 described above is accompanied by a variation in the curvature (concavity) of the reticular reinforcing structure 11, 12 and thus of the surface which supports the head of the seat occupant. In general, the maximum and minimum values of the concavity will occur approximately when the plates 7 are in their highest and lowest positions relative to the structure 2.

Naturally the amplitude and the path of the composite movement described above, as well as the variation in the concavity of the front face of the body 30, depend on the shape of the slots 9 as well as on the diameter and eccentricity of the eccentrics 5 relative to the axis X₄.

This means that the slot 9 could be given a different profile from that - approximately straight -illustrated in the appended drawings, according to specific applicational requirements.

## Claims

1. A seat headrest (1) comprising a support structure (2) and a shaped body (30) defining a surface for supporting the head of the seat occupant, wherein the shaped body (30) is mounted on the structure (2) with the interposition of eccentric means (5,90), characterised in that:
- said eccentric means (5,90) can impart a substantially orbital movement to the shaped body (30) about an axis (X₄) which is substantially horizontal in use;
- and in that cam means (9,10) are provided which, as a result of the orbital movement, can impart a pivotal movement to the shaped body (30) about a further axis (10) which is horizontal in use, the superposition of the orbital movement and of the pivotal movement causing a variation in the overall attitude of the headrest (1) relative to the seat.

2. A headrest according to Claim 1, characterised in that the cam means (9,10) comprises at least one slot (9) and a pin (10) which cooperates slidingly with the slot (9), said slot (9) being provided in the plate (side 7) of the shaped body (30) whilst said pin (10) is provided on the support structure (2).

3. A headrest according to claim 1 or 2, characterised in that the eccentric means (5,90) act adjacent the upper end (8) of the shaped body (30) whilst the cam means (9, 10) act in correspondence with the intermediate region of the shaped body (30).

4. A headrest according to any one of the preceding claims, characterised in that the shaped body (30) includes at least one plate-like body (side 7) having a first aperture (90) which cooperates with the eccentric means (5) and a second aperture (slot 9) defining part of the cam means (9, 10).

5. A headrest according to any one of the preceding Claims 1 to 4, characterised in that the shaped body (30) is inclined to the support structure (2) with the upper end (8) of the shaped body (30) situated in a position further back than the lower end (100) of the shaped body (30) and in that the cam means (9,10) have respective guide surfaces (slots 9) also inclined to the support structure (2) with their upper ends (9b) in positions further back than their lower ends (9a).

6. A headrest according to any one of the preceding claims, characterised in that the shaped body (30) includes a restraining frame (11,12) with a curved configuration on its side which is intended to face towards the head of the person occupying the seat.

7. A headrest according to Claim 6, characterised in that the restraining frame (11, 12) is connected to the support structure (2) so that the orbital and pivotal movements of the shaped body (30) also cause variations in the curvature of the restraining frame (11, 12).

8. A headrest according to Claim 6 or Claim 7, characterised in that the shaped body (30) includes two plate-like bodies (sides 7) associated with the sides of the shaped body (30) and cooperating with the eccentric (5, 90) and the cam means (9, 10) and in that the restraining frame (11, 12) extends as a bridge-like structure between the two plate-like bodies (sides 7).

9. A headrest according to Claim 8, characterised in that the restraining frame includes:
- a flexible strap (11) connecting the two plate-like bodies (sides 7), and
- a plurality of restraining elements (12) extending between said strap (11) and the support structure (2).

10. A headrest according to any one of the preceding claims characterised in that it is provided with an operating handgrip (6) for selectively rotating the eccentric means (5, 90).

## Patentansprüche

1. Kopfstütze (1) an einem Sitz umfassend eine Stützstruktur (2) und einen Formkörper (30), der eine Oberfläche zum Stützen des Kopfs des Sitzenden bildet, bei welcher der Formkörper (30) an der Struktur (2) unter Zwischenschaltung von Exzentermitteln (5, 90) angebracht ist,
dadurch gekennzeichnet,
daß die Exzentermittel (5, 90) dem Formkörper (30) eine im wesentlichen orbitale Bewegung um eine während der Benutzung im wesentlichen horizontale Achse (X₄) erteilen können;
und daß Nockenmittel (9, 10) vorgesehen sind, die dem Formkörper (30) infolge der orbitalen Bewegung eine Schwenkbewegung um eine weitere, während der Benutzung horizontale Achse (10) geben können, wobei die Überlagerung der orbitalen Bewegung und der Schwenkbewegung eine Veränderung in der Gesamtstellung der Kopfstütze (1) relativ zu dem Sitz verursacht.

2. Kopfstütze nach Anspruch 1,
dadurch gekennzeichnet,
daß die Nockenmittel (9, 10) wenigstens einen Schlitz (9) sowie einen Stift (10) umfassen, der verschiebbar mit dem Schlitz (9) zusammenwirkt, wobei der Schlitz (9) in der Platte (Seite 7) des Formkörpers (30) . vorgesehen ist während der Stift (10) an der Stützstruktur (2) vorgesehen ist.

3. Kopfstütze nach Anspruch 1 oder 2,
dadurch gekennzeichnet,
daß die Exzentermittel (5, 90) in der Nähe des oberen Endes (8) des Formkörpers (30) wirken, während die Nockenmittel (9, 10) in Korrespondenzwirkung mit dem mittleren Bereich des Formkörpers (30) stehen.

4. Kopfstütze nach einem der vorhergehenden Ansprüche,
dadurch gekennzeichnet,
daß der Formkörper (30) wenigstens einen plattenähnlichen Körper (Seite 7) umfaßt mit einer ersten Öffnung (90), die mit den Exzentermitteln (5) zusammenwirkt, und einer zweiten Öffnung (Schlitz 9), die einen Teil der Nockenmittel (9, 10) bildet.

5. Kopfstütze nach einem der Ansprüche 1 bis 4,
dadurch gekennzeichnet,
daß der Formkörper (30) relativ zur Stützstruktur (2) geneigt ist, wobei das obere Ende (8) des Formkörpers (30) in einer Position angeordnet ist, die sich weiter hinten befindet als das untere Ende (100) des Formkörpers (30),
und daß die Nockenmittel (9, 10) jeweilige Führungsflächen (Schlitze 9) aufweisen, welche ebenfalls relativ zur Stützstruktur (2) geneigt sind, wobei deren obere Enden (9b) in Positionen angeordnet sind, die sich weiter hinten befinden als ihre unteren Enden (9a).

6. Kopfstütze nach einem der vorhergehenden Ansprüche,
dadurch gekennzeichnet,
daß der Formkörper (30) einen (bewegungs)einengenden Rahmen (11, 12) umfaßt mit einer gekrümmten Konfiguration auf derjenigen Seite, die dazu vorgesehen ist, auf den Kopf der den Sitz einnehmenden Person zu gerichtet zu sein.

7. Kopfstütze nach Anspruch 6,
dadurch gekennzeichnet,
daß der Aufnahmerahmen (11, 12) mit der Stützstruktur (2) derart verbunden ist, daß die Orbital- und Schwenkbewegungen des Formkörpers (30) auch Veränderungen in der Krümmung des einengenden Rahmens (11, 12) bewirken.

8. Kopfstütze nach Anspruch 6 oder 7,
dadurch gekennzeichnet,
daß der Formkörper (30) zwei plattenähnliche Körper (Seiten 7) umfaßt, die den Seiten des Formkörpers (30) zugeordnet sind und mit den Exzenter- (5, 90) und den Nockenmitteln (9, 10) zusammenwirken,
und daß sich der einengende Rahmen (11, 12) als brückenartige Struktur zwischen den zwei plattenähnlichen Körpern (Seiten 7) erstreckt.

9. Kopfstütze nach Anspruch 8,
dadurch gekennzeichnet,
daß der Aufnahmerahmen umfaßt:
- einen die beiden plattenähnlichen Körper (Seiten 7) verbindenden flexiblen Gurt (11) und
- eine Mehrzahl von einengenden Rahmenelementen (12), die sich zwischen dem Gurt (11) und der Stützstruktur (2) erstrecken.

10. Kopfstütze nach einem der vorhergehenden Ansprüche,
dadurch gekennzeichnet,
daß sie einen Betätigungshandgriff (6) zum Drehen der Exzentermittel (5, 90) nach Wahl aufweist.

## Revendications

1. Appui-tête (1) de siège comprenant une structure de support (2) et un corps en forme (30) définissant une surface pour supporter la tête de l'occupant du siège, dans lequel le corps en forme (30) est monté sur la structure (2) avec l'interposition de moyens excentriques (5, 90), caractérisé en ce que :
lesdits moyens excentriques (5, 90) peuvent impartir un mouvement sensiblement orbital au corps en forme (30) autour d'un axe (X₄) qui est sensiblement horizontal en utilisation ;
et en ce que des moyens de cames (9, 10) sont prévus, qui comme résultat du mouvement orbital, peuvent impartir un mouvement pivotant au corps en forme (30) autour d'un autre axe (10) qui est horizontal en utilisation, la superposition du mouvement orbital et du mouvement pivotant provoquant une variation de l'attitude d'ensemble de l'appui-tête (1) par rapport au siège.

2. Appui-tête selon la revendication 1, caractérisé en ce que le moyen de cames (9, 10) comprend au moins une fente (9) et un ergot (10) qui coopère de manière coulissante avec la fente (9), ladite fente (9) étant disposée dans la plaque (le côté 7) du corps (30) tandis que ledit ergot (10) est disposé sur la structure de support (2).

3. Appui-tête selon la revendication 1 ou 2, caractérisé en ce que les moyens excentriques (5, 90) agissent au voisinage de l'extrémité supérieure (8) du corps en forme (30) tandis que les moyens de cames (9, 10) agissent en correspondance avec la région intermédiaire du corps en forme (30).

4. Appui-tête selon l'une quelconque des revendications précédentes, caractérisé en ce que le corps en forme (30) comprend au moins un corps du type plaque (côté 7) ayant une première ouverture (90) qui coopère avec les moyens excentriques (5) et une seconde ouverture (fente 9) constituant une partie des moyens de cames (9, 10).

5. Appui-tête selon l'une quelconque des revendications précédentes 1 à 4, caractérisé en ce que le corps en forme (30) est incliné par rapport à la structure de support (2), l'extrémité supérieure (8) du corps en forme (30) étant située dans une position plus en arrière que l'extrémité inférieure (100) du corps en forme (30), et en ce que les moyens de cames (9, 10) ont des surfaces de guidage respectives (des fentes 9) également inclinées par rapport à la structure de support (2), leurs extrémités supérieures (9b) se trouvant dans des positions plus en arrière que leurs extrémités inférieures (9a).

6. Appui-tête selon l'une quelconque des revendications précédentes, caractérisé en ce que le corps en forme (30) comprend un cadre de maintien (11, 12) avec une conformation incurvée de son côté qui est destiné à faire face à la tête de la personne occupant le siège.

7. Appui-tête selon la revendication 6, caractérisé en ce que le cadre de maintien (11, 12) est relié à la structure de support (2) de telle manière que les mouvements orbital et pivotant du corps en forme (30) provoquent également des variations de la courbure du cadre de maintien (11, 12).

8. Appui-tête selon la revendication 6 ou la revendication 7, caractérisé en ce que le corps en forme (30) comprend deux corps de type plaques (côtés 7) associés avec les côtés du corps en forme (30) et coopérant avec les moyens excentriques (5, 90) et les moyens de cames (9, 10) et en ce que le cadre de maintien (11, 12) s'étend comme une structure du type pont entre les deux corps de type plaques (côtés 7).

9. Appui-tête selon la revendication 8, caractérisé en ce que le cadre de maintien comprend :
un étrier flexible (11) reliant les deux corps du type plaques (côtés 7) ; et,
une pluralité d'éléments de maintien (12) s'étendant entre ledit étrier (11) et la structure de support (2).

10. Appui-tête selon l'une quelconque des revendications précédentes, caractérisé en ce qu'il est muni d'une poignée de manoeuvre (6) pour faire tourner de manière sélective les moyens excentriques (5, 90).
